# EUROPEAN PATENT SPECIFICATION

(11) **EP 2 249 278 B1**
(45) Date of publication and mention of the grant of the patent: **01.08.2018**
(21) Application number: 08870054.7
(22) Date of filing: 25.12.2008
(51) Int. Cl.: G06F 21/12, G06F 21/14

(54) **DONGLE-BASED SOFTWARE COPY PROTECTION METHOD AND SYSTEM AND DONGLE**
SOFTWARE-URHEBERRECHTSCHUTZVERFAHREN AUF DONGLEBASIS UND SYSTEM UND DONGLE
PROCÉDÉ DE PROTECTION DE LOGICIEL À BASE DE CLÉ ÉLECTRONIQUE ET SYSTÈME ET CLÉ ÉLECTRONIQUE

(30) Priority: 29.12.2007 CN 200710308533
(43) Date of publication of application: 10.11.2010
(73) Proprietor: Beijing SenseShield Technology Co., Ltd., Haidian District, Beijing (CN)
(72) Inventor: SUN, Jiping, Beijing 100086 (CN); HAN, Yong, Beijing 100086 (CN)
(74) Representative: Isarpatent
(86) International application number: PCT/CN2008/073727
(87) International publication number: WO 2009/086777

(56) References cited:
- WO-A1-01/82204
- CN-A- 101 038 611
- CN-A- 101 216 873
- US-A1- 2001 037 450

## Description

### Field of the Invention

The present invention relates to software copy protection technologies, and more particularly to a dongle-based software copy protection method, a dongle-based software copy protection system and a dongle.

### Background of the Invention

Since software is pure digitized, software piracy is always a problem perplexing people. Use of a dongle is a main method for implementing software copy protection. The dongle is a hardware device which is connected to a parallel interface or a Universal Serial Bus (USB) interface of a computer. Before protected software is published, a software developer transplants part of codes corresponding to a certain thread in the software into the dongle, so that the protected software must invoke the dongle connected to a computer where the software is located when the protected software is executed, i.e. when threads in the protected software are operated. As a hardware device, the dongle is difficult to be copied, thereby preventing illegal propagation of piracy software.

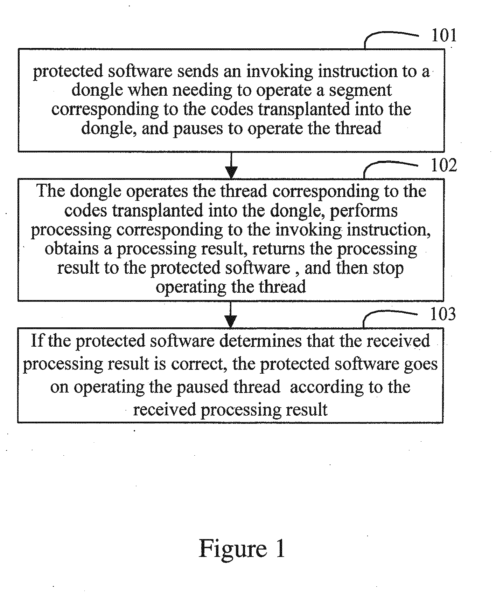

Specifically, referring to Figure 1, a dongle-based software copy protection method is implemented based on a query-response mode, and includes the following steps.

Step 101: Protected software operates a certain thread based on codes in the software. Since part of codes corresponding to the thread are transplanted into a dongle, the protected software sends an invoking instruction to the dongle when needing to operate a segment corresponding to the codes transplanted into the dongle (the segment is called as an encryption point), and pauses to operate the thread.

Step 102: After receiving the invoking instruction, the dongle operates a thread corresponding to the codes transplanted into the dongle, performs processing corresponding to the invoking instruction, obtains a processing result, returns the processing result to the protected software, and then stop operating the thread.

Step 103: If the protected software determines that the received processing result is correct, the protected software goes on operating the thread which is paused in Step 101 according to the received processing result.

As can be seen from the above procedure, the conventional dongle-based software copy protection method may be taken as a method in which a thread is divided into multiple parts at multiple preset encryption points, one part is operated by the protected software, and the other part is operated by the dongle. Therefore, unless the dongle is connected to the computer where the protected software is located, the protected software can not invoke the dongle to implement normal operation when the thread is operated at the encryption points. If the dongle is not connected to the computer where the protected software is located, the protected software can not be operated normally. Prior art docunments US2001/0037450-A1 and WO01/82204-A1 disclose software protection mechanisms using dongles. The above scheme can implement the software copy protection, but it has the following problems.
1. In the conventional dongle-based software copy protection method, the codes corresponding to the same thread are divided into multiple parts which are respectively in the protected software and the dongle, it is necessary to operate the thread alternately by the protected software and the dongle, so that whenever sending the invoking instruction, the protected software must wait for the processing result returned by the dongle to go on operating the thread. Due to limitations of bulk and cost, the processing capability of the dongle is far less than that of the computer where the protected software is located, so that the operating speed of the protected software is limited.
2. The protected software needs to be operated based on an operating system of the computer where the protected software is located. However, due to open characteristics of the operating system, the whole operating procedure of the protected software may be monitored by a cracker. In other words, the cracker may trace any step in the operating procedure of the protected software, which includes interaction between the protected software and the dongle, and a processing procedure after the dongle is invoked and the processing result is received. In the conventional dongle-based software copy protection method, the interaction between the protected software and the dongle at each encryption point adopts the query-response mode in which invoking instructions correspond to processing results one by one, and there is no association between the encryption points.
In this way, the cracker can obtain each invoking instruction and the processing result corresponding to each encryption point by monitoring, and the cracker can deduce functions implemented by the invoking instruction and the processing result of each encryption point only if the cracker analyzes the invoking instruction and the processing result of each encryption point, so as to decode the codes transplanted into the dongle.

As can be seen, reliability of the conventional dongle-based software copy protection method is not high, and the operating speed of the protected software is low.

### Summary of the Invention

In view of the above, the present invention provides a dongle-based software copy protection method, a dongle-based software copy protection system and a dongle, so as to improve the reliability of software copy protection and the operating speed of protected software.

The present invention provides a dongle-based software copy protection method including: transplanting part of codes in protected software into a dongle, and operating, by the protected software and the dongle, threads respectively based on codes in the protected software and codes in the dongle at the same time; wherein the method further includes:
sending, by the protected software, an invoking instruction to the dongle, and going on operating the thread based on the codes in the protected software;
performing, by the dongle, processing according to the invoking instruction received, obtaining a processing result, and going on operating the thread based on the codes in the dongle;
sending, by the protected software, a result obtaining instruction to the dongle when necessary, and
providing, by the dongle, the processing result to the protected software according to the result obtaining instruction..

The present invention provides a dongle-based software copy protection system, including: protected software being operated in a computer, and a dongle; the protected software and the dongle operating threads respectively based on codes in the protected software and codes in the dongle; and
part of codes in the protected software being transplanted into the dongle;
the protected software is adapted to send an invoking instruction to the dongle, and go on operating the thread based on the codes in the protected software; and
the dongle is adapted to perform processing according to the invoking instruction received, obtain a processing result, go on operate the thread based on the codes in the dongle, receive a result obtaining instruction from the protected software, and provide the processing result to the protected software according to the result obtaining instruction.

The present invention provides a dongle including an interface unit, a nonvolatile memory and a CPU; wherein
the interface unit is connected with a computer in which protected software is operated;
part of codes in the protected software are transplanted into the nonvolatile memory; and
the CPU is adapted to receive an invoking instruction from the protected software through the interface unit, perform processing according to the invoking instruction, obtain a processing result, go on operating thread based on codes in the CPU, receive a result obtaining instruction from the protected software, and output the processing result through the interface unit according to the result obtaining instruction.

As can be seen from the above scheme, part of codes in the protected software are transplanted into the dongle, and the protected software and the dongle simultaneously operate whole threads respectively based on the codes in the protected software and the codes in the dongle, rather than that operations of the dongle are triggered based on the conventional query-response mode. When a certain thread in the protected software is operated, only if the thread corresponding to the codes transplanted into the dongle needs to be operated to obtain the processing result, the protected software sends the invoking instruction to the dongle. That is to say, in the embodiments of the present invention the encryption points are configured at association points between the threads in the protected software instead of that the encryption points are configured in the same thread and the same thread is divided into multiple parts which are operated alternately by the protected software and the dongle, and thus the protected software does not need to wait for the processing result returned by the dongle, but may go on operating the threads, thereby improving the operating speed of the protected software.

Moreover, the dongle continuously operates the threads based on the codes transplanted into the dongle, i.e. the operating lifecycle of the dongle is the same as the operating lifecycle of the protected software. Further, after the processing result is obtained by receiving and processing the invoking instruction, the dongle does not need to return the processing result to the protected software instantly, but may return the processing result to the protected software when necessary, so that for the encryption points, the invoking instructions do not correspond to the processing results one by one, but have a complex reticulate relation. In this way, even if the cracker monitors the protected software based on the operating system, the cracker can not learn the processing result corresponding to each invoking instruction, and thus can not decode the codes transplanted into the dongle.

### Brief Description of the Drawings

Figure 1 is a flowchart illustrating a conventional dongle-based software copy protection method.
Figure 2 is a flowchart illustrating a dongle-based software copy protection method according to a demonstrated embodiment of the present invention.
Figure 3 is a flowchart illustrating a dongle-based software copy protection method according to an embodiment of the present invention.
Figure 4 is a schematic diagram illustrating a dongle-based software copy protection system according to an embodiment of the present invention.

### Detailed Description of the Invention

In order to make the object, technical solutions and merits of the present invention clearer, the present invention will be described hereinafter in detail with reference to the accompanying drawings and embodiments.

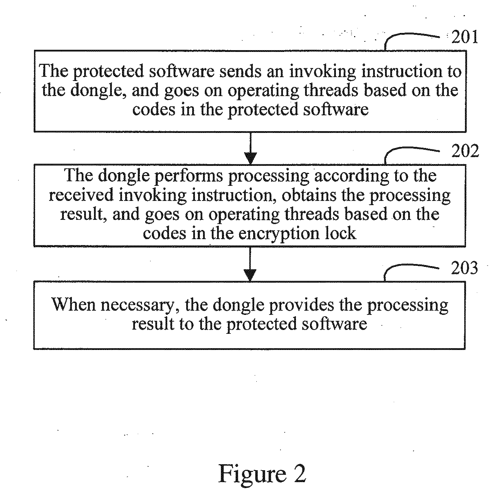

Figure 2 is a flowchart illustrating a dongle-based software copy protection method according to a demonstrated embodiment of the present invention. As shown in Figure 2, part of codes in protected software are transplanted into a dongle, e.g. all codes corresponding to at least one thread are transplanted into the dongle, and the protected software and the dongle operate threads respectively based on the codes in the protected software and the codes in the dongle. The dongle-based software copy protection method according to the demonstrated embodiment of the present invention includes the following steps.

In Step 201, the protected software sends an invoking instruction to the dongle, and goes on operating the thread based on the codes in the protected software.

In this step, the protected software sends the invoking instruction to request the dongle to operate a thread corresponding to the invoking instruction based on the codes in the dongle and obtain a processing result. The processing result is used for operating another thread by the protected software, i.e. the thread corresponding to the codes in the protected software is associated with the thread corresponding to the codes transplanted into the dongle, and an association point between the threads may be taken as an encryption point.

Step 202: During an operating procedure, the dongle performs processing according to the received invoking instruction, obtains the processing result corresponding to the invoking instruction, and goes on operating the threads based on the codes in the dongle.

Before this step, the dongle may automatically operate the threads based on the codes in the dongle after being powered, and may also operate the threads based on the codes in the dongle after receiving the invoking instructions sent by the protected software.

No matter how the operation of the dongle is started, the dongle may go on operating the threads after obtaining the processing result.

Step 203: When necessary, the dongle provides the processing result to the protected software.

In this step, the protected software may send a result obtaining instruction to the dongle when necessary, and the dongle provides the processing result to the protected software according to the received result obtaining instruction. Before the result obtaining instruction is received, the processing result may be stored in a memory of the dongle.

When the result obtaining instruction sent by the protected software is received, it is possible that the dongle does not obtain the processing result corresponding to the result obtaining instruction. Therefore, the dongle may firstly determine whether the processing result corresponding to the result obtaining instruction is obtained; if the processing result corresponding to the result obtaining instruction is obtained, the dongle provides the processing result corresponding to the result obtaining instruction to the protected software; otherwise, the dongle informs the protected software to wait or to operate other threads.

Alternatively, the dongle may inform the protected software after obtaining the processing result, and the protected software sends the result obtaining instruction to the dongle after receiving information indicating that the processing result is obtained. In this way, it is unnecessary for the dongle to perform determining according to the received result obtaining instruction, thereby saving hardware resources in the dongle.

Several types of invoking instructions may be preconfigured in the dongle. In this step, the dongle may firstly determine whether the received invoking instruction belongs to the several preconfigured types; if the received invoking instruction belongs to the several preconfigured types, the dongle may return the processing result to the protected software instantly after obtaining the processing result; otherwise, the dongle returns the processing result to the protected software after the protected software sends the result obtaining instruction.

Thus, the procedure ends.

As can be seen from the above scheme, part of codes in the protected software are transplanted into the dongle, and the protected software and the dongle simultaneously operates whole threads respectively based on the codes in the protected software and the codes in the dongle, other than that operations of the dongle are triggered based on the conventional query-response mode. When a certain thread in the protected software is operated, only if the thread corresponding to the codes transplanted into the dongle needs to be operated to obtain the processing result, the protected software sends the invoking instruction to the dongle. That is to say, in the embodiments of the present invention the encryption points are configured at association points between the threads in the protected software instead of that the encryption points are configured in the same thread and the same thread is divided into multiple parts which are operated alternately by the protected software and the dongle, and thus the protected software does not need to wait for the processing result returned by the dongle, but may go on operating other threads, thereby improving the operating speed of the protected software.

Moreover, the dongle continuously operates the threads based on the codes transplanted into the dongle, i.e. the operation lifecycle of the dongle is the same as the operation lifecycle of the protected software. Further, after the processing result is obtained by receiving and processing the invoking instruction, the dongle does not need to return the processing result to the protected software instantly, but may return the processing result to the protected software when necessary (e.g. when receiving the result obtaining instruction sent by the protected software), so that for the encryption points, the invoking instructions do not correspond to the processing results one by one, but have a complex reticulate relation. In this way, even if the cracker monitors the protected software based on the operating system, the cracker can not learn the processing result corresponding to each invoking instruction, and thus can not decode the codes transplanted into the dongle.

That is to say, the dongle is always in an operating state after being started, which is different from the conventional dongle with an inner logic of a simple ingress→egress logic, i.e. after the protected software sends the invoking instruction to the dongle, the dongle starts to work from an ingress of the codes in the dongle, quits at an egress and returns the processing result.

The mode of operating the threads in the dongle may be the same as a conventional standard mode, e.g. standard encrypting and decrypting operations are performed by using a cryptology algorithm; of cause, a function defined or exploited by a user may also be used. The following codes may be used to implement an example that the dongle continuously operates the threads.

```
    Process Start
    do {
       get_new_command_from Process_Manager;
       goto_corresponding_function;
    } while (no_terminate_instruction)
    Terminate()
    Function1()
    { //
    }
    Function2()
    { //
    }
```

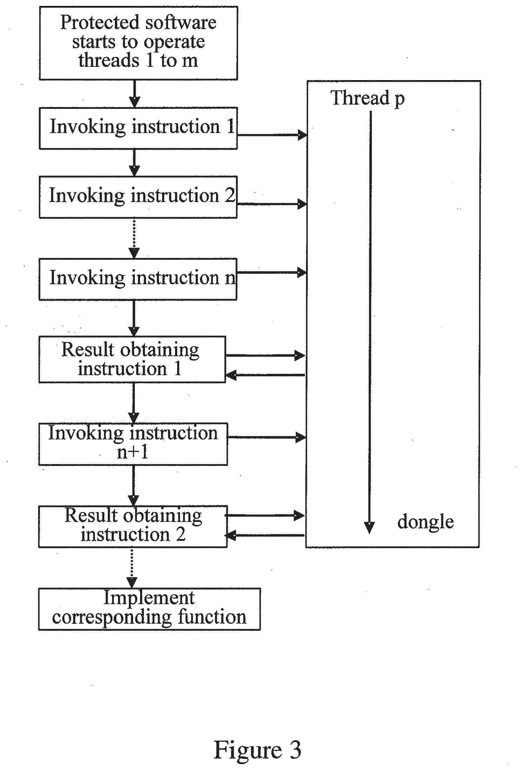

The procedure shown in Figure 2 may also be illustrated by the procedure shown in Figure 3.

Referring to Figure 3, the protected software operates threads 1 to m, the dongle operates a thread p, and the thread p is associated with the threads 1 to m, to implement a specific function of the protected software.

After starting to operate the threads 1 to m, the protected software continuously sends invoking instructions 1 to n to the dongle. The dongle continuously operates the thread p, performs corresponding processing after receiving each invoking instruction, stores processing results corresponding to the invoking instructions in the memory of the dongle, and waits for the protected software to obtain the processing results.

Following conditions exists in the above procedure: the dongle performs processing according to the invoking instruction 1, obtains a processing result and stores the processing result in the memory; processing to be performed according to the invoking instruction 2 received subsequently is to update the processing result corresponding to the invoking instruction 1. In this way, after performing the processing according to the invoking instruction 2 and obtaining a processing result, the dongle still stores the processing result corresponding to the invoking instruction 2 in the memory, and updates the processing result corresponding to the invoking instruction 1. As can be seen, it is unnecessary for the dongle to return the processing result to the protected software instantly every time the dongle performs the processing according to each invoking instruction, so multiple interactions between the dongle and the protected software are not needed, but it is only needed that the protected software sends the invoking instructions to the dongle in turn, and the dongle can continuously implement multiple processing procedures associated with each other.

Still referring to Figure 3, after continuously sending the invoking instructions 1 to n to the dongle, if the protected software needs the processing result corresponding to any of the invoking instructions 1 to n, the protected software sends a result obtaining instruction 1 to the dongle to indicate the processing result needed by the protected software, and the dongle reads the processing result from the memory of the dongle and sends the processing result to the protected software.

After obtaining the processing result according to the result obtaining instruction 1 and going on operating the threads, the protected software may send an invoking instruction n+1 to the dongle, and then send result obtaining instructions 2 to n+1 (may send the result obtaining instructions in a sequence or send a selected result obtaining instruction according to requirements), and obtains the processing results corresponding to the invoking instructions 1 to n+1, so as to implement the specific function of the protected software.

As can be seen from Figure 3, the protected software does not need to wait for the processing result returned by the dongle, but may go on operating other threads, and for the encryption points, the invoking instructions do not correspond to the processing result one by one, but have a complex reticulate relation.

Hereinafter, the dongle-based software copy protection method according to the embodiments of the present invention will be further described with reference to a specific embodiment.

It is taken as an example that the specific function implemented by the protected software is print configuration for text processing, and the method includes the following steps.
1. Function elements needing to be encrypted in protected software are determined, e.g. control of page size, control of font size, control of font distance and control of print page number and so on. That is to say, when the protected software needs implement a print function, the page size, the font size and the font distance are nearly relative to computation in a dongle.
2. The protected software sends a first invoking instruction to the dongle, and sends characteristic information of contents to be printed to the dongle at the same time, e.g. word number, paragraph number and desired print page number, and does not request the dongle to return a processing result instantly. After receiving the first invoking instruction and data, the dongle invokes a thread m operated in the dongle, calculates the font size, the font distance and the page size according to the word number, the paragraph number and the desired print page number, and stores a typesetting result as a processing result in the memory of the dongle after the calculating.
3. When the dongle invokes the thread operated in the dongle to perform the processing in step 2, the protected software may perform other operations at the same time, e.g. query of papers which can be used by the printer. The protected software sends a second invoking instruction to the dongle subsequently, and sends the type of the papers which can be used by the printer and desired font size to the dongle. The dongle compares the received information about paper and font with the processing result in step 2, to determine whether the processing result can meet paper requirements of the printer; if the processing result can meet the paper requirements of the printer, the processing result corresponding to the first invoking instruction is remained; if the processing result can not meet the paper requirements of the printer, the dongle recalculates a processing result according to the new paper requirements, updates the processing result corresponding to the first invoking instruction, and stores the recalculated processing result corresponding to the first invoking instruction in the memory.
4. The protected software sends a first result obtaining instruction to the dongle, requests to obtain a calculating result of actually printed page number, i.e. the processing result corresponding to the first invoking instruction. The dongle reads the actually printed page number obtained by calculating from the memory, and returns the actually printed page number to the protected software.
5. The protected software determines whether the page number obtained in step 4 meets the requirements; if the page number obtained in step 4 does not meet the requirements, the protected software sends the dongle a third invoking instruction in which a desired adjustment scope, e.g. increased or decreased page number, is taken as data. The dongle performs processing according to the demands indicated in the third invoking instruction, and stores a processing result in the memory. If the page number returned by the dongle in this step meets the requirements, the next step is performed directly.
6. The protected software sends the dongle a fourth invoking instruction in which the desired scope of font distance is taken as data. After receiving the scope of the font distance, the dongle compares the desired scope of the font distance with the processing result stored in the memory; if the processing result in the memory is in the desired scope of the font distance indicated by the fourth invoking instruction, it is not needed to recalculate the processing result; otherwise, the dongle invokes the thread in the dongle and recalculates a processing result to adjust the former processing result, e.g. adjust the page number.
7. The software sends a second result obtaining instruction to the dongle, and requests to obtain the typesetting result. The dongle reads the typesetting data obtained by calculating, and returns the typesetting data to the protected software. The protected software performs a print step after obtaining the typesetting result.

When implementing the above print configuration, the dongle may also perform processing according to other invoking instructions sent by the protected software, e.g. calculating an encryption label for version storage of a document, and adding a visible anti-counterfeiting cachet in a document, to implement the encryption and protection of the protected software through the dongle.

Hereinafter, a dongle-based software copy protection system and a dongle will be described in detail.

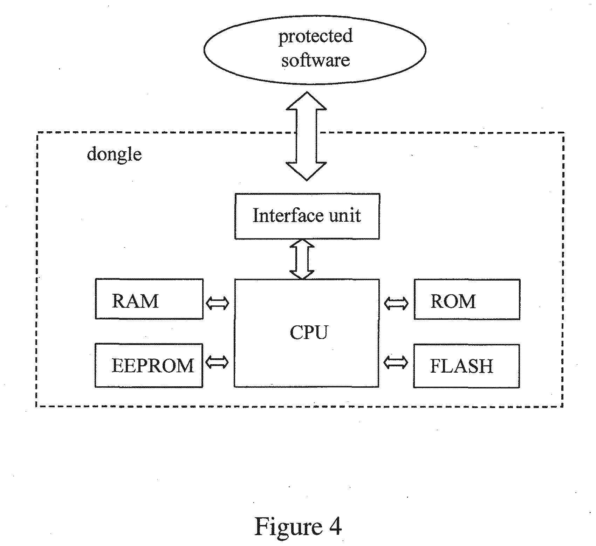

As shown in Figure 4, the dongle-based software copy protection system includes: protected software operated in a computer, and a dongle. Part codes in the protected software are transplanted into the dongle, and the protected software and the dongle operate threads respectively based on the codes in the protected software and the codes in the dongle.

Different from conventional methods, the protected software and the dongle operate the threads respectively based on the codes in the protected software and the codes in the dongle, other than that operations of the dongle are triggered based on a conventional query-response mode.

In this way, the protected software sends an invoking instruction to the dongle, and goes on operating the threads based on the codes in the protected software. The dongle performs processing according to the received invoking instruction, obtains a processing result, goes on operating the threads based on the codes in the dongle, and provides the processing result to the protected software when necessary.

Specifically, referring to Figure 4, the dongle includes an interface unit, a nonvolatile memory and a CPU. The nonvolatile memory is any one or combination of an E²PROM, a ROM and a Flash shown in Figure 4.

The interface unit may be a parallel interface or a USB interface, and is used to connect to the computer operating the protected software.

The CPU receives the invoking instruction of the protected software through the interface unit, performs the processing according to the invoking instruction, obtains the processing result, goes on operating the threads based on the codes loaded by the CPU, and outputs the processing result through the interface unit when necessary.

In practical applications, after being powered, the CPU loads codes from the nonvolatile memory, and starts to operate the codes; or the CPU loads codes from the nonvolatile memory according to the invoking instruction received from the protected software, and starts to operate the codes.

The interaction between the dongle and the protected software may be implemented according to the specific processing procedure in the above method.

For example, the CPU receives a result obtaining instruction from the protected software through the interface unit, and then outputs a processing result corresponding to the result obtaining instruction through the interface unit.

After receiving the result obtaining instruction, the CPU may determine whether the processing result corresponding to the result obtaining instruction is obtained; if the processing result corresponding to the result obtaining instruction is obtained, the CPU outputs the processing result through the interface unit; otherwise, the CPU informs, through the interface unit, the protected software to wait or to go on operating other threads.

Alternatively, after obtaining the processing result, the CPU may inform the protected software through the interface unit that the processing result is obtained. In this way, the protected software sends the result obtaining instruction to the dongle after being informed, so as to avoid that the protected software sends useless invoking instructions to the dongle for many times before the processing result is obtained, thereby saving the processing resources of the CPU.

Several types of invoking instructions which need to return the processing result instantly is preconfigured in the dongle, after the dongle receives the invoking instruction and before the protected software sends the result obtaining instruction to the dongle when necessary, the dongle determines according to the type of the invoking instruction whether it is needed to provide the processing result to the protected software instantly after the processing result corresponding to the invoking instruction is obtained; if it is needed to provide the processing result to the protected software instantly, the dongle provides the processing result to the protected software instantly after obtaining the processing result corresponding to the invoking instruction; otherwise, the dongle waits for the result obtaining instruction.

After obtaining the processing result and before receiving the result obtaining instruction, the CPU may store the processing result in a memory. At this time, if the CPU receives another invoking instruction again through the interface unit and performs processing according to the invoking instruction, the CPU may update the processing result stored in the memory.

As can be seen from the above system and dongle, in the present invention, part of codes in the protected software are transplanted into the dongle, and the protected software and the encryption simultaneously operate whole threads respectively based on the codes in the protected software and the codes in the dongle, rather than that operations of the dongle are triggered based on the conventional query-response mode. When a certain thread in the protected software is operated, only if the thread corresponding to the codes transplanted into the dongle needs to be operated to obtain the processing result, the protected software sends the invoking instruction to the dongle. That is to say, in the embodiments of the present invention the encryption points are configured at association points between threads in the protected software instead of that the encryption points are configured in the same thread and the same thread is divided into multiple parts which are operated alternately by the protected software and the dongle, and thus the protected software does not need to wait for the processing result returned by the dongle, but may go on operating other threads, thereby improving the operating speed of the protected software.

Moreover, the dongle continuously operates the threads based on the codes transplanted into the dongle, i.e. the operating lifecycle of the dongle is the same as the operating lifecycle of the protected software. Further, after the processing result is obtained by receiving and processing the invoking instruction, the dongle does not need to return the processing result to the protected software instantly, but may return the processing result to the protected software when necessary (e.g. when receiving the result obtaining instruction sent by the protected software), so that for the encryption points, the invoking instructions do not correspond to the processing results one by one, but have a complex reticulate relation. In this way, even if the cracker monitors the protected software based on the operating system, the cracker can not learn the processing result corresponding to each invoking instruction, and thus can not decode the codes transplanted into the dongle.

The foregoing is only preferred embodiments of the present invention and is not for use in limiting the protection scope of the present invention. Any modification, equivalent replacement and improvement made within the principle of the present invention should be covered under the protection scope of the present invention.

## Claims

1. A dongle-based software copy protection method, comprising:
transplanting part of codes in protected software into a dongle, and operating, by the protected software and the dongle, threads respectively based on codes in the protected software and codes in the dongle at the same time; wherein the method further comprises:
sending, by the protected software, an invoking instruction to the dongle, and going on operating the thread based on the codes in the protected software;
performing, by the dongle, processing according to the invoking instruction received, obtaining a processing result, and going on operating the thread based on the codes in the dongle;
sending, by the protected software, a result obtaining instruction to the dongle when necessary, and
providing, by the dongle, the processing result to the protected software according to the result obtaining instruction.

2. The method of claim 1, further comprising:
before providing, by the dongle, the processing result to the protected software according to the result obtaining instruction,
determining, by the dongle, whether the processing result corresponding to the result obtaining instruction is obtained; if the processing result corresponding to the result obtaining instruction is obtained, providing the processing result to the protected software; otherwise, informing the protected software to wait or to go on operating other thread.

3. The method of claim 1, further comprising:
after obtaining, by the dongle, the processing result, and before sending, by the protected software, the result obtaining instruction to the dongle,
informing, by the dongle, the protected software that the processing result is obtained.

4. The method of claim 2 or 3, further comprising:
after obtaining the processing result and before receiving the result obtaining instruction,
storing, by the dongle, the processing result in a memory of the dongle.

5. The method of claim 4, further comprising:
after storing the processing result in the memory,
receiving, by the dongle, another invoking instruction, and performing processing according to the another invoking instruction, and updating the processing result stored in the memory.

6. A dongle-based software copy protection system, comprising: protected software being operated in a computer, and a dongle; the protected software and the dongle operating threads respectively based on codes in the protected software and codes in the dongle; and
part of codes in the protected software being transplanted into the dongle;
the protected software is adapted to send an invoking instruction to the dongle, and go on operating the thread based on the codes in the protected software; and
the dongle is adapted to perform processing according to the invoking instruction received, obtain a processing result, go on operate the thread based on the codes in the dongle, receive a result obtaining instruction from the protected software, and provide the processing result to the protected software according to the result obtaining instruction.

7. The system of claim 6, wherein the dongle comprises: an interface unit, a nonvolatile memory and a CPU;
the interface unit is connected with the computer, and the CPU interacts with the protected software through the interface unit;
the part of codes in the protected software are transplanted into the nonvolatile memory;
after being powered, the CPU automatically loads the codes from the nonvolatile memory, and starts to operate the threads;
or, the CPU loads the codes from the nonvolatile memory according to the invoking instruction received from the protected software, and starts to operate the thread.

8. The system of claim 7, wherein the dongle further comprises a memory unit;
the CPU is adapted to perform the processing according to the invoking instruction obtained, obtain the processing result, and store the processing result in the memory unit after obtaining the processing result.

9. The system of claim 8, wherein the CPU is further adapted to receive another invoking instruction through the interface unit after storing the processing result in the memory unit, perform processing according to the another invoking instruction, and update the processing result stored in the memory unit.

10. A dongle, comprising: an interface unit, a nonvolatile memory and a CPU; wherein
the interface unit is connected with a computer in which protected software is operated;
part of codes in the protected software are transplanted into the nonvolatile memory; and
the CPU is adapted to receive an invoking instruction from the protected software through the interface unit, perform processing according to the invoking instruction, obtain a processing result, go on operating thread based on codes in the CPU, receive a result obtaining instruction from the protected software, and output the processing result through the interface unit according to the result obtaining instruction.

11. The dongle of claim 10, wherein
the CPU further is further adapted to determine whether the processing result corresponding to the result obtaining instruction is obtained; if the processing result corresponding to the result obtaining instruction is obtained, output the processing result through the interface unit; otherwise, inform the protected software through the interface unit to wait or to go on operating other thread.

12. The dongle of claim 10 or 11, further comprising a memory unit, wherein after obtaining the processing result and before receiving the result obtaining instruction, the CPU is further adapted to store the processing result in the memory unit.

13. The dongle of claim 12, wherein the CPU is further adapted to receive another invoking instruction through the interface unit after storing the processing result in the memory unit, perform processing according to the another invoking instruction, and update the processing result stored in the memory unit.

## Patentansprüche

1. Dongle-basiertes Softwarekopierschutzverfahren, umfassend:
Transplantieren eines Teils von Codes in einer geschützten Software in einen Dongle und Betreiben, durch die geschützte Software und den Dongle, von Threads jeweils gleichzeitig basierend auf Codes in der geschützten Software und Codes in dem Dongle, wobei das Verfahren ferner Folgendes umfasst:
Senden, durch die geschützte Software, einer Aufrufanweisung an den Dongle und Fortfahren, den Thread basierend auf den Codes in der geschützten Software zu betreiben,
Durchführen, durch den Dongle, eines Verarbeitens gemäß der empfangenen Aufrufanweisung, Erhalten eines Verarbeitungsergebnisses und Fortfahren, den Thread basierend auf den Codes in dem Dongle zu betreiben, Senden, durch die geschützte Software, einer Ergebniserhaltungsanweisung an den Dongle, wenn notwendig, und
Bereitstellen, durch den Dongle, des Verarbeitungsergebnisses an die geschützte Software gemäß der Ergebniserhaltungsanweisung.

2. Verfahren nach Anspruch 1, ferner umfassend:
vor dem Bereitstellen, durch den Dongle, des Verarbeitungsergebnisses an die geschützte Software gemäß der Ergebniserhaltungsanweisung,
Bestimmen, durch den Dongle, ob das Verarbeitungsergebnis, das der Ergebniserhaltungsanweisung entspricht, erhalten ist;
wenn das Verarbeitungsergebnis, das der Ergebniserhaltungsanweisung entspricht, erhalten ist, Bereitstellen des Verarbeitungsergebnisses an die geschützte Software; andernfalls Informieren der geschützten Software zu warten oder fortzufahren einen anderen Thread zu betreiben.

3. Verfahren nach Anspruch 1, ferner umfassend:
nach dem Erhalten, durch den Dongle, des Verarbeitungsergebnisses und vor dem Senden, durch die geschützte Software, der Ergebniserhaltungsanweisung an den Dongle,
Informieren, durch den Dongle, der geschützten Software, dass das Verarbeitungsergebnis erhalten ist.

4. Verfahren nach Anspruch 2 oder 3, ferner umfassend:
nach dem Erhalten des Verarbeitungsergebnisses und vor dem Empfangen der Ergebniserhaltungsanweisung, Speichern, durch den Dongle, des Verarbeitungsergebnisses in einem Speicher des Dongles.

5. Verfahren nach Anspruch 4, ferner umfassend:
nach dem Speichern des Verarbeitungsergebnisses in dem Speicher,
Empfangen, durch den Dongle, einer anderen Aufrufanweisung und Durchführen eines Verarbeitens gemäß der anderen Aufrufanweisung und Aktualisieren des Verarbeitungsergebnisses, das in dem Speicher gespeichert ist.

6. Dongle-basiertes Softwarekopierschutzsystem, umfassend:
eine geschützte Software, die in einem Rechner betrieben wird, und einen Dongle, wobei die geschützte Software und
der Dongle Threads jeweils basierend auf Codes in der geschützten Software und Codes in dem Dongle betreiben, und
einen Teil von Codes in der geschützten Software, der in den Dongle transplantiert wird,
wobei die geschützte Software ausgelegt ist, um eine Aufrufanweisung an den Dongle zu senden und fortzufahren, den Thread basierend auf den Codes in der geschützten Software zu betreiben, und
wobei der Dongle ausgelegt ist, um ein Verarbeiten gemäß der empfangenen Aufrufanweisung durchzuführen, ein Verarbeitungsergebnis zu erhalten, fortzufahren, den Thread basierend auf den Codes in dem Dongle zu betreiben, eine Ergebniserhaltungsanweisung von der geschützten Software zu empfangen und das Verarbeitungsergebnis an die geschützte Software gemäß der Ergebniserhaltungsanweisung bereitzustellen.

7. System nach Anspruch 6, wobei der Dongle Folgendes umfasst: eine Schnittstelleneinheit, einen nichtflüchtigen Speicher und eine CPU,
wobei die Schnittstelleneinheit mit dem Rechner verbunden ist und die CPU mit der geschützten Software durch die Schnittstelleneinheit in Wechselwirkung tritt,
wobei der Teil von Codes in der geschützten Software in den nichtflüchtigen Speicher transplantiert wird, wobei, nach einem Einschalten, die CPU die Codes automatisch aus dem nichtflüchtigen Speicher lädt und beginnt, die Threads zu betreiben,
oder die CPU die Codes aus dem nichtflüchtigen Speicher gemäß der Aufrufanweisung, die von der geschützten Software empfangen wird, lädt und beginnt, den Thread zu betreiben.

8. System nach Anspruch 7, wobei der Dongle ferner eine Speichereinheit umfasst,
wobei die CPU ausgelegt ist, um das Verarbeiten gemäß der erhaltenen Aufrufanweisung durchzuführen, das Verarbeitungsergebnis zu erhalten und das Verarbeitungsergebnis in der Speichereinheit zu speichern, nachdem sie das Verarbeitungsergebnis erhält.

9. System nach Anspruch 8, wobei die CPU ferner ausgelegt ist, um eine andere Aufrufanweisung durch die Schnittstelleneinheit zu empfangen, nachdem sie das Verarbeitungsergebnis in der Speichereinheit speichert, ein Verarbeiten gemäß einer anderen Aufrufanweisung durchzuführen und das Verarbeitungsergebnis zu aktualisieren, das in der Speichereinheit gespeichert ist.

10. Dongle, umfassend: eine Schnittstelleneinheit, einen nichtflüchtigen Speicher und eine CPU, wobei
die Schnittstelleneinheit mit einem Rechner verbunden ist, in dem eine geschützte Software betrieben wird,
ein Teil von Codes in der geschützten Software in den nichtflüchtigen Speicher transplantiert wird, und
die CPU ausgelegt ist, um eine Aufrufanweisung von der geschützten Software durch die Schnittstelleneinheit zu empfangen, ein Verarbeiten gemäß der Aufrufanweisung durchzuführen, ein Verarbeitungsergebnis zu erhalten, fortzufahren, einen Thread basierend auf Codes in der CPU zu betreiben, eine Ergebniserhaltungsanweisung von der geschützten Software zu empfangen und das Verarbeitungsergebnis durch die Schnittstelleneinheit gemäß der Ergebniserhaltungsanweisung auszugeben.

11. Dongle nach Anspruch 10, wobei
die CPU ferner ausgelegt ist, um zu bestimmen, ob das Verarbeitungsergebnis, das der Ergebniserhaltungsanweisung entspricht, erhalten ist; wenn das Verarbeitungsergebnis, das der Ergebniserhaltungsanweisung entspricht, erhalten ist, das Verarbeitungsergebnis durch die Schnittstelleneinheit auszugeben; andernfalls, die geschützte Software durch die Schnittstelleneinheit zu informieren, zu warten oder fortzufahren, einen anderen Thread zu betreiben.

12. Dongle nach Anspruch 10 oder 11, ferner umfassend eine Speichereinheit, wobei, nachdem sie das Verarbeitungsergebnis erhält und bevor sie die Ergebniserhaltungsanweisung empfängt, die CPU ferner ausgelegt ist, um das Verarbeitungsergebnis in der Speichereinheit zu speichern.

13. Dongle nach Anspruch 12, wobei die CPU ferner ausgelegt ist, um eine andere Aufrufanweisung durch die Schnittstelleneinheit zu empfangen, nachdem sie das Verarbeitungsergebnis in der Speichereinheit speichert, ein Verarbeiten gemäß einer anderen Aufrufanweisung durchzuführen und das Verarbeitungsergebnis zu aktualisieren, das in der Speichereinheit gespeichert ist.

## Revendications

1. Procédé de protection de copie de logiciel à base de clé électronique, consistant à :
transplanter une partie des codes du logiciel protégé dans une clé électronique, et exploiter, par le logiciel protégé et la clé électronique, des fils d'exécution respectivement basés sur des codes dans le logiciel protégé et des codes dans la clé électronique en même temps ;
dans lequel le procédé consiste en outre à :
envoyer, par le logiciel protégé, une instruction d'appel à la clé électronique, et exploiter le fil d'exécution sur la base des codes dans le logiciel protégé ;
exécuter, par la clé électronique, un traitement selon l'instruction d'appel reçue, obtenir un résultat de traitement, et exploiter le fil d'exécution sur la base des codes dans la clé électronique ;
envoyer, par le logiciel protégé, une instruction d'obtention de résultat à la clé électronique si nécessaire, et
fournir, par la clé électronique, le résultat de traitement au logiciel protégé selon l'instruction d'obtention de résultat.

2. Procédé selon la revendication 1, consistant en outre à :
avant de fournir, par la clé électronique, le résultat de traitement au logiciel protégé selon l'instruction d'obtention de résultat,
déterminer, par la clé électronique, si le résultat de traitement correspondant à l'instruction d'obtention de résultat est obtenu ; si le résultat de traitement correspondant à l'instruction d'obtention de résultat est obtenu, fournir le résultat de traitement au logiciel protégé ; sinon, informer le logiciel protégé d'attendre ou de exploiter un autre fil d'exécution.

3. Procédé selon la revendication 1, consistant en outre à :
après avoir l'obtenu, par la clé électronique, le résultat de traitement, et avant d'envoyer, par le logiciel protégé, l'instruction d'obtention de résultat à la clé électronique,
informer, par la clé électronique, le logiciel protégé que le résultat de traitement est obtenu.

4. Procédé selon la revendication 2 ou 3, consistant en outre à :
après avoir obtenu le résultat de traitement et avant de recevoir l'instruction d'obtention de résultat, stocker, par la clé électronique, le résultat de traitement dans une mémoire de la clé électronique.

5. Procédé selon la revendication 4, consistant en outre à :
après avoir stocké le résultat de traitement dans la mémoire,
recevoir, par la clé électronique, une autre instruction d'appel, et exécuter le traitement selon une autre instruction d'appel, et mettre à jour le résultat de traitement stocké dans la mémoire.

6. Système de protection de copie de logiciel à base de clé électronique, comprenant : un logiciel protégé exploité dans un ordinateur, et une clé électronique ; le logiciel protégé et la clé électronique exploitant des fils d'exécution respectivement sur la base de codes dans le logiciel protégé et de codes dans la clé électronique ; et
une partie des codes dans le logiciel protégé étant transplantée dans la clé électronique ;
le logiciel protégé est adapté pour envoyer une instruction d'appel à la clé électronique, et exploiter le fil d'exécution sur la base des codes dans le logiciel protégé ; et
la clé électronique est adaptée pour exécuter un traitement selon l'instruction d'appel reçue, obtenir un résultat de traitement, exploiter le fil d'exécution sur la base des codes dans la clé électronique, recevoir une instruction d'obtention de résultat depuis le logiciel protégé, et fournir le résultat de traitement au logiciel protégé selon l'instruction d'obtention de résultat.

7. Système selon la revendication 6, dans lequel la clé électronique comprend : une unité d'interface, une mémoire non-volatile et une UC ;
l'unité d'interface est reliée à l'ordinateur, et l'UC interagit avec le logiciel protégé par le biais de l'unité d'interface ;
une partie des codes dans le logiciel protégé est transplantée dans la mémoire non-volatile ;
après avoir été mise sous tension, l'UC charge automatiquement les codes depuis la mémoire non-volatile, et commence à exploiter les fils d'exécution ;
ou, l'UC charge les codes depuis la mémoire non-volatile selon l'instruction d'appel reçue du logiciel protégé, et commence à exploiter le fil d'exécution.

8. Système selon la revendication 7, dans lequel la clé électronique comprend en outre une unité de mémoire ; l'UC est adaptée pour exécuter le traitement selon l'instruction d'appel obtenue, obtenir le résultat de traitement, et stocker le résultat de traitement dans l'unité mémoire après avoir obtenu le résultat de traitement.

9. Système selon la revendication 8, dans lequel l'UC est en outre adaptée pour recevoir une autre instruction d'appel par le biais de l'unité d'interface après avoir stocké le résultat de traitement dans l'unité mémoire, exécuter le traitement selon une autre instruction d'appel, et mettre à jour le résultat de traitement stocké dans l'unité mémoire.

10. Clé électronique, comprenant : une unité d'interface, une mémoire non-volatile et une UC ; dans laquelle l'unité d'interface est reliée à un ordinateur dans lequel un logiciel protégé est exploité ;
une partie des codes dans le logiciel protégé est transplantée dans la mémoire non-volatile ; et
l'UC est adaptée pour recevoir une instruction d'appel depuis le logiciel protégé par le biais de l'unité d'interface, exécuter le traitement selon l'instruction d'appel, obtenir un résultat de traitement, exploiter le fil d'exécution sur la base de codes dans l'UC, recevoir une instruction d'obtention de résultat depuis le logiciel protégé, et sortir le résultat de traitement par le biais de l'unité d'interface selon l'instruction d'obtention de résultat.

11. Clé électronique selon la revendication 10, dans laquelle l'UC est en outre adaptée pour déterminer si le résultat de traitement correspondant à l'instruction d'obtention de résultat est obtenu ; si le résultat de traitement correspondant à l'instruction d'obtention de résultat est obtenu, sortir le résultat de traitement par le biais de l'unité d'interface ; sinon, informer le logiciel protégé par le biais de l'unité d'interface d'attendre ou d'exploiter un autre fil d'exécution.

12. Clé électronique selon la revendication 10 ou 11, comprenant en outre une unité mémoire, dans laquelle, après avoir obtenu le résultat de traitement et avant de recevoir l'instruction d'obtention de résultat, l'UC est en outre adaptée pour stocker le résultat de traitement dans l'unité mémoire.

13. Clé électronique selon la revendication 12, dans laquelle l'UC est en outre adaptée pour recevoir une autre instruction d'appel par le biais de l'unité d'interface après avoir stocké le résultat de traitement dans l'unité mémoire, exécuter le traitement selon une autre instruction d'appel, et mettre à jour le résultat de traitement stocké dans l'unité mémoire.
